(19) 

Europäisches
Patentamt
European
Patent Office
Office européen
des brevets

(11) **EP 4 152 564 A1**

(12) **EUROPEAN PATENT APPLICATION**
published in accordance with Art. 153(4) EPC

(43) Date of publication:
**22.03.2023 Bulletin 2023/12**

(21) Application number: **21829818.0**

(22) Date of filing: **18.05.2021**

(51) International Patent Classification (IPC):
**H02K 1/02** (2006.01)

(52) Cooperative Patent Classification (CPC):
**H02K 1/02**

(86) International application number:
**PCT/JP2021/018873**

(87) International publication number:
**WO 2021/261121 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2020 JP 2020109866**

(71) Applicant: **JFE Steel Corporation
Tokyo 100-0011 (JP)**

(72) Inventors:
• **YOSHIZAKI, Souichiro**
  **Tokyo 100-0011 (JP)**
• **SENDA, Kunihiro**
  **Tokyo 100-0011 (JP)**
• **ZAIZEN, Yoshiaki**
  **Tokyo 100-0011 (JP)**

(74) Representative: **Grünecker Patent- und
Rechtsanwälte
PartG mbB
Leopoldstraße 4
80802 München (DE)**

(54) **MOTOR CORE AND MOTOR**

(57)     Provided is a miniaturized motor core with multiple poles for use in motors that require both output density and high efficiency. The motor core is formed by stacking a plurality of electrical steel sheets with a tooth width of 0.5 mm or more and 2.0 mm or less and 12 or more of slots arranged between the teeth, where the electrical steel sheet has an iron loss of 220 W/kg or less when excited at 1.0 T-3000 Hz.

FIG. 1

EP 4 152 564 A1

**Description**

TECHNICAL FIELD

This disclosure relates to a motor core and a motor.

BACKGROUND

For devices that use batteries as a driving power source, such as cordless home electrical appliances (e.g., stick-type vacuum cleaner), cutting tools, and drones, the battery life and the weight greatly affect the value of a product. Therefore, there is a strong demand for high efficiency, which can be achieved by reducing losses in control systems of motors and inverters, miniaturization of motors, and high speed. For this reason, motors are designed to have a minimum size and to be capable of efficiently outputting a maximum output according to the purpose. Particularly, motors are strongly required to have a high motor output (rotational speed × torque) per unit weight, that is, a high output density.
Under these circumstances, design methods such as "multipolarization" (see JP H11-98790 A (PTL 1)) that increases the number of magnets arranged in a rotor, and "high speed" (see JP 2002-136013 A (PTL 2)) that increases the rotational speed are commonly used in motors for applications that strongly require a high output density.

CITATION LIST

Patent Literature

PTL 1: JP H11-98790 A
PTL 2: JP 2002-136013 A

SUMMARY

(Technical Problem)

However, the above-mentioned motor design methods have a problem that an increase in the excitation frequency of a motor core causes a large increase in iron loss and a significant decrease in motor efficiency. Further, when the design methods are used and motors are miniaturized, it is necessary to select a slot combination according to the decrease in body size and the increase in the number of poles. As a result, the tooth width should be largely reduced. In response to this request, the effect of processing strain introduced into an end face of an electrical steel sheet is relatively increased during punching, which is one of the processes of processing the electrical steel sheet into a motor core. This processing strain causes obvious deterioration of the magnetic properties of the motor core, resulting in a further increase in motor iron loss.
Further, since drones require a motor to drive a fan to levitate, there is a very strong demand for a high output density in motors for drone applications. Therefore, when the above-mentioned motor design methods are used, it is often necessary to introduce cooling air into the motor to avoid an increase in the amount of heat generated inside the motor due to an increase in iron loss, and to avoid dielectric breakdown of winding wires and demagnetization of magnets. One of the disadvantages of introducing cooling air is motor failure caused by entrainment or entrapment of dust, and there is a strong need to eliminate causes of motor failure that could result in crashes for motors used in flying vehicle applications.
It could thus be helpful to provide a miniaturized motor core with multiple poles for use in motors that require both output density and high efficiency.

(Solution to Problem)

To solve the above problem, we have diligently studied iron core materials with electromagnetic properties that are suitable for motors with a high output density. As a result, we have clarified magnetic properties and a material design that are required for motors aiming at achieving a high output density through multipolarization and high speed, and have completed the present disclosure. We thus provide the following.

1. A motor core formed by stacking a plurality of sheet-shaped soft magnetic materials with a tooth width of 0.5 mm or more and 2.0 mm or less and 12 or more of slots arranged between the teeth, wherein the soft magnetic material has an iron loss of 220 W/kg or less when excited at 1.0 T-3000 Hz.

2. The motor core according to 1., wherein the soft magnetic material has a magnetic flux density of 1.55 T or more in a magnetic field of 5000 A/m.

3. The motor core according to 1. or 2., wherein the soft magnetic material is an electrical steel sheet, and the electrical steel sheet has a Si concentration distribution in a thickness direction.

4. A motor comprising the motor core according to any one of 1. to 3., and a rotor in which 14 or more magnets are arranged in a circumferential direction.

5. A motor having a sealed outer rotor structure, wherein a rotor is arranged outside the motor core according to any one of 1. to 3.

6. The motor according to 4., wherein the rotor is arranged outside the motor core, and the motor has a sealed outer rotor structure.

(Advantageous Effect)

According to the present disclosure, it is possible to apply an iron core (core) material that satisfies specified requirements to a miniaturized motor core with multiple poles to be used in a motor that requires both output density and high efficiency, thereby reducing losses and suppressing an increase in motor temperature in a motor that uses this motor core. As a result, it is possible to prevent an increase in temperature, which is a cause of failure of motors used in flying vehicles such as drones. Therefore, the present disclosure has extremely high application value in industrial terms.

BRIEF DESCRIPTION OF THE DRAWINGS

In the accompanying drawings:

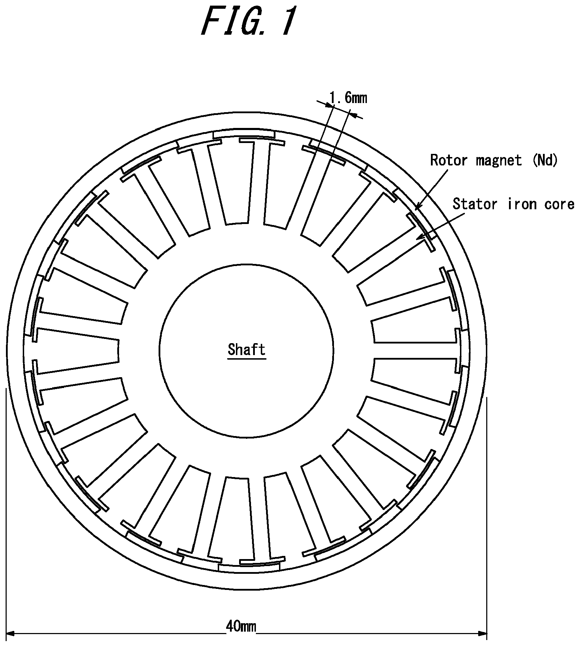

FIG. 1 illustrates a stator core used in a core (iron core) manufacturing test.

DETAILED DESCRIPTION

The motor core of the present disclosure is formed by stacking a plurality of sheet-shaped soft magnetic materials with a tooth width of 0.5 mm or more and 2.0 mm or less and 12 or more of slots arranged between the teeth, where the soft magnetic material has an iron loss ($W_{10/3k}$) of 220 W/kg or less when excited at 1.0 T-3000 Hz.

The following describes the specifications of the motor core of the present disclosure and the requirements for the soft magnetic material of the motor core, as well as the reasons for their limitation. Note that the effect of the present disclosure can be achieved as long as the soft magnetic material used as the iron core material has the specified magnetic properties and material design, and the effect of the present disclosure does not depend on the composition, thickness, or manufacturing method. As used herein, in addition to an electrical steel sheet, amorphous metal and Permendur can be used as the soft magnetic material. In the following description such as the description of the examples, the "%" for chemical composition of an electrical steel sheet means "mass percent".

[Tooth width: 0.5 mm or more and 2.0 mm or less]

By narrowing the tooth width, it is possible to secure a wide slot space to introduce a winding wire, and it is possible to secure the number of windings, which are effective in increasing the output density of a motor. Therefore, the tooth width is set to 2.0 mm or less. It is more preferably 1.5 mm or less. On the other hand, when the tooth width is too small, the magnetic flux density of the iron core may increase excessively, which results in an increase in iron loss, and it is difficult to manufacture the motor core by processing an electrical steel sheet in the first place. Therefore, the tooth width is set to 0.5 mm or more. It is preferably 1.0 mm or more. It is preferably 1.5 mm or less.

[Number of slots: 12 or more]

By setting the number of slots to 12 or more, it is possible to cope with the multipolarization described above. There is no upper limit, which may be increased as needed to meet the lower limit of the tooth width depending on the degree of multipolarization. For example, it may be 72 or less.

[Soft magnetic material: iron loss of 220 W/kg or less when excited at 1.0 T-3000 Hz]

It is possible to effectively reduce the iron loss, which is one of the motor losses, by using a motor core where the iron loss is 220 W/kg or less when a material processed into the shape of the motor core is excited at 1.0 T-3000 Hz. The motor core of the present disclosure has the above-described tooth width and number of slots, which are suitable for motors aiming at multipolarization or high-speed rotation to increase the output density. For motors with such specifications, the excitation frequency of the iron core is about 1000 Hz or higher. In actual motor driving circumstances, the excitation frequency of the iron core is even higher, which is around 3000 Hz, taking the influence of harmonics due to inverter into consideration. In other words, we found that the iron loss when excited at a frequency of 3000 Hz, which is also the iron loss of a material processed to the above-described tooth width and number of slots, reflects the iron loss properties in an actual motor. Therefore, we decided to prepare the motor core with a soft magnetic material with an iron loss of 220 W/kg or less when excited at 1.0 T-3000 Hz. It is more preferably 150 W/kg or less. However, since the use of a soft magnetic material with low iron loss increases the costs, the soft magnetic material may be selected as needed. There is no lower limit, but the iron loss may be, for example, 15 W/kg or more.

The iron loss described in the present disclosure is assumed to be a value measured and evaluated after subjecting a motor coring test piece to primary winding and secondary winding. However, in the case of a motor with an outer rotor, evaluation by SST (single sheet test) which uses a minute test piece cut out from a motor core with an original machined end face may be performed.

[Soft magnetic material: magnetic flux density of 1.55T or more in magnetic field of 5000 A/m]

By applying a soft magnetic material with a magnetic flux density ($B_{50}$) of 1.55 T or more in a magnetic field of 5000 A/m to the motor core, it is easier to obtain a higher motor torque, thereby further increasing the output density of a motor. Battery-powered motors, such as those used in cordless vacuum cleaners and drones, have voltage and current limitations that limit the strength of a field magnet produced by a winding wire around a motor core. In other words, the number of turns of the winding wire is adjusted to obtain a field magnet that achieves the required rotational speed and torque of the motor. However, although an increase in the number of turns strengthens the field magnet, it also increases the required voltage. Therefore, under the above constraints, the available strength of the field magnet is limited to a certain range. In this regard, we examined a motor with the tooth width and the number of slots according to the present disclosure and found that a range of the available strength of the field magnet equivalent to the magnetic flux density $B_{50}$, that is, the high magnetic flux density of the iron core material at 5000 A/m effectively contributes to increasing the torque of the motor. It is more preferably 1.60 T or more. It is still more preferably 1.65 T or more. There is no upper limit, but it may be 1.90 T or less, for example.

[Electrical steel sheet: Si concentration distribution in thickness direction]

When an electrical steel sheet is used as the soft magnetic material, the electrical steel sheet has a Si concentration distribution in the thickness direction. In other words, it has a higher Si concentration in a surface layer than in the center of the thickness, which not only improves the iron loss properties at high frequencies but also can suppress deterioration of iron loss properties due to punching. For the Si concentration distribution that achieves such magnetic properties, the difference $\Delta$Si between the Si concentration in the mid-thickness and the Si concentration in the surface layer is preferably 1.5 mass% to 3.5 mass%. This is because if $\Delta$Si is less than 1.5 mass%, it is difficult to obtain an effective high-frequency iron loss improving effect. On the other hand, if $\Delta$Si exceeds 3.5 mass%, hysteresis loss may increase, resulting in larger motor losses at relatively low speeds. Siliconizing treatment, cladding treatment, or the like may be used to provide the Si concentration distribution to the electrical steel sheet, and there is no need to specifically limit the manufacturing method. The Si concentration in the surface layer may be 3.5 mass% or more. It is preferably 4.5 mass% or more. The Si concentration in the surface layer may be 7.0 mass% or less. It is preferably 6.5 mass% or less. The Si concentration in the mid-thickness may be 1.5 mass% or more. It is preferably 2.5 mass% or more. The Si concentration in the mid-thickness may be 5.5 mass% or less. It is preferably 4.0 mass% or less. As used herein, the surface layer is a range from the surface to 1/3 of the thickness, and the Si concentration in the surface layer is the average Si concentration in this thickness range.

A motor core is prepared by stacking a plurality of sheet-shaped soft magnetic materials having the above configuration. As used herein, the number of the sheet-shaped soft magnetic materials may be appropriately adjusted according to the required output of a motor.

In manufacturing the motor core, we assume punching as a means of processing the soft magnetic material, which is the raw material, into the shape of the core. However, if the above requirements are met, the desired effect can also be obtained even the soft magnetic material is processed with a laser.

The motor core is combined with a rotor to form a motor. The following describes the motor according to the present disclosure.

[Rotor: 14 or more magnets arranged in circumferential direction]

The number of magnets in the rotor is set to 14 or more to obtain the effect of increasing the motor torque by multipolarization. In other words, the torque of a magnet motor is expressed by the following equation, and the following equation indicates that increasing the number of poles (the number of pole pairs × 2) is an effective design guideline for increasing the torque. An increase in the number of poles corresponds to an increase in the number of magnets in the rotor. The following equation indicates that, although multipolarization is effective for increasing the torque, the excitation frequency of the iron core increases as the number of poles increases because there is a proportional relationship between the excitation frequency f of the iron core and the number of pole pairs $P_n$. Among iron losses, an eddy current loss increases in proportion to the square of the excitation frequency f, and the increase in iron loss due to an increase in frequency becomes remarkable especially when the number of magnets is 14 or more. Therefore, in the motor having the tooth width and the number of slots according to the present disclosure, a high motor torque is realized while suppressing an increase in loss by combining an iron core material with an iron loss of 220 W/kg or less when excited at 1.0 T-3000 Hz, especially when the number of magnets is 14 or more. The number of magnets is preferably 16 or more and more preferably 20 or more. There is no upper limit to the number of magnets. However, as the number of poles increases (the number of magnets increases), the excitation frequency (proportional to the number of magnets × rotation speed) increases, the iron loss increases, and the costs increase. These factors may be taken into consideration when designing the motor, and the number may be determined as appropriate. It may be, for example, 48 or less.

$$ T = P_n\{\psi_a i_q + (L_d - L_q)i_d i_q\} $$

T: motor torque
$P_n$: number of pole pairs
$\psi_a$: flux linkage due to magnetic flux of magnet
$i_{d,q}$: current in d or q axis
$L_{d,q}$: inductance in d or q axis

[Motor: sealed outer rotor structure]

First, the motor preferably has an outer rotor structure, because when a rotor is arranged outside the motor core, it is possible to arrange many magnets to promote multipolarization. Further, a sealed structure, which does not require the introduction of cooling air, renders it possible to prevent entrapment of foreign matters that increase the risk of failure.

EXAMPLES

(Example 1)

[Influence of iron core material and motor properties]

Motors having a sealed outer rotor structure were prepared using the iron core material (soft magnetic material) listed in Table 1, where the motors had the motor core (stator iron core) and the rotor illustrated in FIG. 1, 14 poles, and 21 slots, and the tooth width was 1.6 mm. Si steel, silicon-gradient steel (steel with Si concentration gradient), and Permendur were obtained by punching using a press mold. Because it was difficult to subject amorphous metal to punching, a desired core shape was cut out by subjecting a core material, which was obtained by stacking and bonding amorphous metal, to wire electric discharge machining. The core using Permendur was annealed at 800 °C for two hours in a dry Ar atmosphere. The magnetic properties of the iron core material listed in Table 1 were measured as follows. A ring core with an outer diameter of 55 mm, an inner diameter of 35 mm, and a stacking thickness of 10.0 mm was prepared by wire electric discharge machining, the ring core was subjected to primary winding and secondary winding, and the iron loss $W_{10/3k}$ and the magnetic flux density $B_{50}$ were measured.

The motor was driven at 11000 rpm-0.25 Nm, and the motor loss under each set of conditions were evaluated as follows.

Motor loss (W) = input power (W) - motor output (W)
Copper loss (W) = winding resistance ($\Omega$) × current $(Arms)^2$
Motor iron loss (W) = motor loss (W) - copper loss (W)

Further, the temperature inside the motor was measured with a thermocouple thermometer when the motor had been driven for 20 minutes under the same conditions.

Table 1

| No. | Core material | Average Si concertration (mass%) | Si concentration a surface layer (mass%) | Si concentration at center (mass%) | Sheet thickness (nm) | Iron loss $W_{10/3k}$ (W/kg) | Magnetic flux density $B_{50}$ m | Si concentration distribution | Motor iron loss (W) | Copper toss (W) | Motor toss (W) | Motor efficiency (%) | Motor temperature (°C) | Remarks |
|---|---|---|---|---|---|---|---|---|---|---|---|---|---|---|
| 1 | 1.0% Si steel | 1.0 | 1.0 | 1.0 | 0.2 | <u>480</u> | 1.70 | No | 67 | 45 | 112 | 74.4 | 158 | Comparative Example |
| 2 | 2.0% Si steel | 2.0 | 2.0 | 2.0 | 0.2 | <u>430</u> | 1.68 | No | 59 | 47 | 106 | 75.8 | 153 | Comparative Example |
| 3 | 3.0% Si steel | 3.0 | 3.0 | 3.0 | 0.2 | <u>370</u> | 1.67 | No | 55 | 49 | 104 | 76.2 | 149 | Comparative Example |
| 4 | 6.5% Si steel | 6.5 | 6.5 | 6.5 | 0.2 | 198 | 1.51 | No | 37 | 48 | 85 | 80.6 | 134 | Example |
| 5 | Silicon-gradient steel | 3.5 | 4.0 | 2.5 | 0.2 | 213 | 1.69 | Yes | 29 | 42 | 71 | 83.8 | 98 | Example |
| 6 | Silicon-gradient steel | 5.5 | 6.5 | 3.5 | 0.2 | 195 | 1.56 | Yes | 24 | 45 | 69 | 84.2 | 90 | Example |
| 7 | 1.0% Si steel | 1.0 | 1.0 | 1.0 | 0.1 | <u>223</u> | 1.69 | No | 52 | 46 | 98 | 77.6 | 146 | Comparative Example |
| 8 | 2.0% Si steel | 2.0 | 2.0 | 2.0 | 0.1 | 189 | 1.67 | No | 38 | 43 | 81 | 81.5 | 120 | Example |
| 9 | 3.0% Si steel | 3.0 | 3.0 | 3.0 | 0.1 | 155 | 1.65 | No | 36 | 44 | 80 | 81.7 | 110 | Example |
| 10 | 6.5% Si steel | 6.5 | 6.5 | 6.5 | 0.1 | 89 | 1.49 | No | 27 | 49 | 76 | 82.6 | 107 | Example |
| 11 | Silicon-gradient steel | 3.5 | 4.0 | 2.5 | 0.1 | 95 | 1.66 | Yes | 15 | 43 | 58 | 86.7 | 86 | Example |
| 12 | Silicon-gradient steel | 5.5 | 6.5 | 3.5 | 0.1 | 99 | 1.53 | Yes | 12 | 48 | 60 | 86.3 | 80 | Example |

| No. | Core materi-al | Average Si concertration (mass%) | Si concentration a surface layer (mass%) | Si concentration at center (mass%) | Sheet thickness (nm) | Iron loss $W_{10/3k}$ (W/kg) | Magnetic flux densi-ty $B_{50}$ m | Si concentra-tion distribu-tion | Motor iron loss (W) | Copper toss (W) | Motor toss (W) | Motor effi-ciency (%) | Motor tem-perature (°C) | Remarks |
|---|---|---|---|---|---|---|---|---|---|---|---|---|---|---|
| 13 | Amorphous (10%Si-12%B-Fe) | 10.0 | 10.0 | 10.0 | 0.025 | 40 | 1.51 | No | 26 | 49 | 75 | 82.9 | 100 | Example |
| 14 | Permendur (48%Co-2%V-Fe) | 0.0 | 0.0 | 0.0 | 0.2 | 187 | 2.34 | No | 42 | 39 | 81 | 81.5 | 110 | Example |
| 15 | Permendur (48%Co-2%V-Fe) | 0.0 | 0.0 | 0.0 | 0.1 | 113 | 2.31 | No | 37 | 40 | 77 | 82.4 | 102 | Example |

According to the results listed in Table 1, it can be understood that using an iron core material (soft magnetic material) with a $W_{10/3k}$ of 220 W/kg or less effectively reduces the motor iron loss. Further, the copper loss can also be effectively reduced under the conditions using an iron core material with an iron loss of 220 W/kg or less and a magnetic flux density $B_{50}$ of 1.55 T or more. In Examples, the temperature of the motor was reduced because both the motor iron loss and the copper loss were reduced. The heat resistance temperature of an insulation coating of a winding wire in a motor is generally about 180 °C. Because the temperature in the motor according to the present disclosure is about 140 °C or lower as described above, it can be confirmed that there is no problem with a sealed motor.

As used herein, the iron loss is a value obtained by cutting a minute test piece for SST from the tooth portion of the motor core without additional processing of the end of the original tooth, and conducting a general magnetic property test.

(Example 2)

[Influence of tooth width]

Motors were prepared based on a motor having the outer rotor structure with 14 poles and 21 slots illustrated in FIG. 1, the tooth width of the motors was changed as listed in Table 2, and the motor efficiency was measured when various core materials (thickness: 0.1 mm) listed in Table 2 were used in each motor. The measurement results are also listed in Table 2.

Table 2

| No. | Tooth width (mm) | Core material | Average Si concentration (mass%) | Si concentration in surface layer (mass%) | Si concertration at center (mass%) | Iron loss $W_{10/3k}$ (W/kg) | Magnetic flux density $B_{50}$ (I) | Motor iron loss (W) | Copper loss (W) | Motor loss (W) | Motor efficiency (%) | Remarks |
|---|---|---|---|---|---|---|---|---|---|---|---|---|
| 1 | 0.5 | 3.0% Si steel | 3.0 | 3.0 | 3.0 | 146 | 1.62 | 45 | 37 | 82 | 81.2 | Example |
| 2 | 0.5 | Silicon-gradient steel | 5.5 | 6.5 | 3.5 | 90 | 1.56 | 15 | 43 | 58 | 86.7 | Example |
| 3 | 1.0 | 1.0% Si steel | 1.0 | 1.0 | 1.0 | 223 | 1.69 | 71 | 46 | 117 | 73.2 | Comparative Example |
| 4 | 1.0 | 3.0% Si steel | 3.0 | 3.0 | 3.0 | 146 | 1.62 | 37 | 44 | 81 | 81.4 | Example |
| 5 | 1.0 | Silicon-gradient steel | 5.5 | 6.5 | 3.5 | 90 | 1.56 | 12 | 45 | 57 | 87.0 | Exanple |
| 6 | 1.5 | 1.0% Si steel | 1.0 | 1.0 | 1.0 | 223 | 1.69 | 65 | 47 | 112 | 74.5 | Comparative Example |
| 7 | 1.5 | 3.0% Si steel | 3.0 | 3.0 | 3.0 | 146 | 1.62 | 34 | 46 | 80 | 81.7 | Exanple |
| 8 | 1.5 | Silicon-gradient steel | 5.5 | 6.5 | 3.5 | 90 | 1.56 | 10 | 46 | 56 | 87.1 | Example |
| 9 | 2.0 | 1.0% Si steel | 1.0 | 1.0 | 1.0 | 223 | 1.69 | 52 | 46 | 98 | 77.6 | Comparative Example |
| 10 | 2.0 | 3.0% Si steel | 3.0 | 3.0 | 3.0 | 146 | 1.62 | 30 | 47 | 77 | 82.4 | Example |
| 11 | 2.0 | Silicon-gradient steel | 5.5 | 6.5 | 3.5 | 90 | 1.56 | 9 | 46 | 55 | 87.5 | Example |

| No. | Tooth width (mm) | Core material | Average Si concentration (mass%) | Si concentration in surface layer (mass%) | Si concertration at center (mass%) | Iron loss $W_{10/3k}$ (W/kg) | Magnetic flux density $B_{50}$ (I) | Motor iron loss (W) | Copper loss (W) | Motor loss (W) | Motor efficiency (%) | Remarks |
|---|---|---|---|---|---|---|---|---|---|---|---|---|
| 12 | 2.5 | 1.0% Si steel | 1.0 | 1.0 | 1.0 | 223 | 1.69 | 19 | 46 | 65 | 85.1 | Comparative Example |
| 13 | 2.5 | 3.0% Si steel | 3.0 | 3.0 | 3.0 | 146 | 1.62 | 14 | 42 | 56 | 87.1 | Comparative Example |
| 14 | 2.5 | Silicon-gradient steel | 5.5 | 6.5 | 3.5 | 90 | 1.56 | 9 | 43 | 52 | 88.1 | Comparative Example |
| 15 | 3.0 | 1.0% Si steel | 1.0 | 1.0 | 1.0 | 223 | 1.69 | 16 | 49 | 65 | 85.2 | Comparative Example |
| 16 | 3.0 | 3.0% Si steel | 3.0 | 3.0 | 3.0 | 146 | 1.62 | 13 | 42 | 55 | 87.4 | Conparative Example |
| 17 | 3.0 | Silicon-gradient steel | 5.5 | 6.5 | 3.5 | 90 | 1.56 | 8 | 44 | 52 | 88.2 | Comparative Example |

EP 4 152 564 A1

From Table 2, it can be understood that, when the teeth are 0.5 mm or more and 2.0 mm or less and the core material has an iron loss $W_{10/3k}$ of 220 W/kg or less, an increase in iron loss is effectively suppressed. It can also be seen that a material with Si concentration gradient in the thickness direction has almost no increase in iron loss, and as result, its efficiency is maintained at a high level even if the tooth width is small.

The above examples were evaluated by applying a motor core to a motor with a sealed outer rotor structure, but note that the scope of the present disclosure is not limited to the motor type disclosed in the examples as long as the requirements of the present disclosure are met.

**Claims**

1. A motor core formed by stacking a plurality of sheet-shaped soft magnetic materials with a tooth width of 0.5 mm or more and 2.0 mm or less and 12 or more of slots arranged between the teeth, wherein the soft magnetic material has an iron loss of 220 W/kg or less when excited at 1.0 T-3000 Hz.

2. The motor core according to claim 1, wherein the soft magnetic material has a magnetic flux density of 1.55 T or more in a magnetic field of 5000 A/m.

3. The motor core according to claim 1 or 2, wherein the soft magnetic material is an electrical steel sheet, and the electrical steel sheet has a Si concentration distribution in a thickness direction.

4. A motor comprising the motor core according to any one of claims 1 to 3, and a rotor in which 14 or more magnets are arranged in a circumferential direction.

5. A motor having a sealed outer rotor structure, wherein a rotor is arranged outside the motor core according to any one of claims 1 to 3.

6. The motor according to claim 4, wherein the rotor is arranged outside the motor core, and the motor has a sealed outer rotor structure.

# *FIG. 1*

1. 6mm

Rotor magnet (Nd)

Stator iron core

Shaft

40mm

## INTERNATIONAL SEARCH REPORT

| International application No. |
| --- |
| PCT/JP2021/018873 |

**A. CLASSIFICATION OF SUBJECT MATTER**
H02K 1/02(2006.01)i
FI: H02K1/02 Z
According to International Patent Classification (IPC) or to both national classification and IPC

**B. FIELDS SEARCHED**

Minimum documentation searched (classification system followed by classification symbols)
H02K1/02

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/117095 A1 (JFE STEEL CORPORATION) 20 June 2019 (2019-06-20) paragraphs [0001]-[0075], fig. 1-5 | 1-6 |
| X | WO 2019/117089 A1 (JFE STEEL CORPORATION) 20 June 2019 (2019-06-20) paragraphs [0001]-[0071], fig. 1-5 | 1-6 |
| X | JP 2010-63252 A (JFE STEEL CORPORATION) 18 March 2010 (2010-03-18) paragraphs [0001]-[0032], fig. 1-4 | 1-6 |
| X | JP 2010-62275 A (JFE STEEL CORPORATION) 18 March 2010 (2010-03-18) paragraphs [0001]-[0026], fig. 1-4 | 1-6 |

☒ Further documents are listed in the continuation of Box C.　　☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 July 2021 (26.07.2021) | 03 August 2021 (03.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/018873 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | WO 2018/173877 A1 (JOHNSON CONTROLS-HITACHI AIR CONDITIONING) 27 September 2018 (2018-09-27) paragraph [0037], fig. 5 | 1-6 |

Form PCT/ISA/210 (continuation of second sheet) (January 2015)

## INTERNATIONAL SEARCH REPORT
Information on patent family members

International application No.

PCT/JP2021/018873

| Patent Documents referred in the Report | Publication Date | Patent Family | Publication Date |
|---|---|---|---|
| WO 2019/117095 A1 | 20 Jun. 2019 | CN 111448330 A<br>KR 10-2020-0089741 A | |
| WO 2019/117089 A1 | 20 Jun. 2019 | CN 111479942 A | |
| JP 2010-63252 A | 18 Mar. 2010 | (Family: none) | |
| JP 2010-62275 A | 18 Mar. 2010 | (Family: none) | |
| WO 2018/173877 A1 | 27 Sep. 2018 | JP 2018-160953 A | |

Form PCT/ISA/210 (patent family annex) (January 2015)

**REFERENCES CITED IN THE DESCRIPTION**

**Patent documents cited in the description**

- JP H1198790 A

- JP 2002136013 A